# EUROPEAN PATENT APPLICATION

(11) **EP 1 940 076 A1**
(43) Date of publication of application: **02.07.2008**
(21) Application number: 07024646.7
(22) Date of filing: 19.12.2007
(51) Int. Cl.: H04L 12/14

(54) **Method and system for sending media stream-based charging request in a multiparty session**

(30) Priority: 25.12.2006 CN 200610157728
(71) Applicant: Huawei Technologies Co., Ltd., Longgang District Shenzhen Guangdong 518129 (CN)
(72) Inventor: Shan, Mingjun, Shenzhen Guangdong Province 518129 (CN); Li, Chun, Shenzhen Guangdong Province 518129 (CN)
(74) Representative: Pfenning, Meinig & Partner GbR

(57) **Abstract**

A method for media stream-based charging in a multiparty session includes: receiving, by an application server, a media stream changing request for the multiparty session, wherein the media stream changing request is initiated by a party in the multiparty session; obtaining, by the application server, an ID of an initiator of the media stream changing request and/or information of a changed media stream according to the media stream changing request for the session; sending, by the application server, a charging request to a charging server, the charging request carries the information of the changed media stream and/or the ID of the initiator of the media stream changing request; and charging, by the charging server, for the media stream according to the charging request. Additionally, the invention further provides a system, an application server and a charging server for media stream-based charging in a multiparty session.

## Description

### Field of the Invention

The present invention relates to the field of charging, in particular, to a method and a system for sending a media stream-based charging request in a multiparty session.

### Background of the Invention

Push to Talk over Cellular (PoC) service is a group media communication service based on IP technologies. The PoC service is implemented with half-duplex VolP technology based on an IP bearer network. After a PoC user configures a multi receiver list, he/she may carry out a point-to-point or point-to-multipoint half-duplex conversation with other PoC user(s).

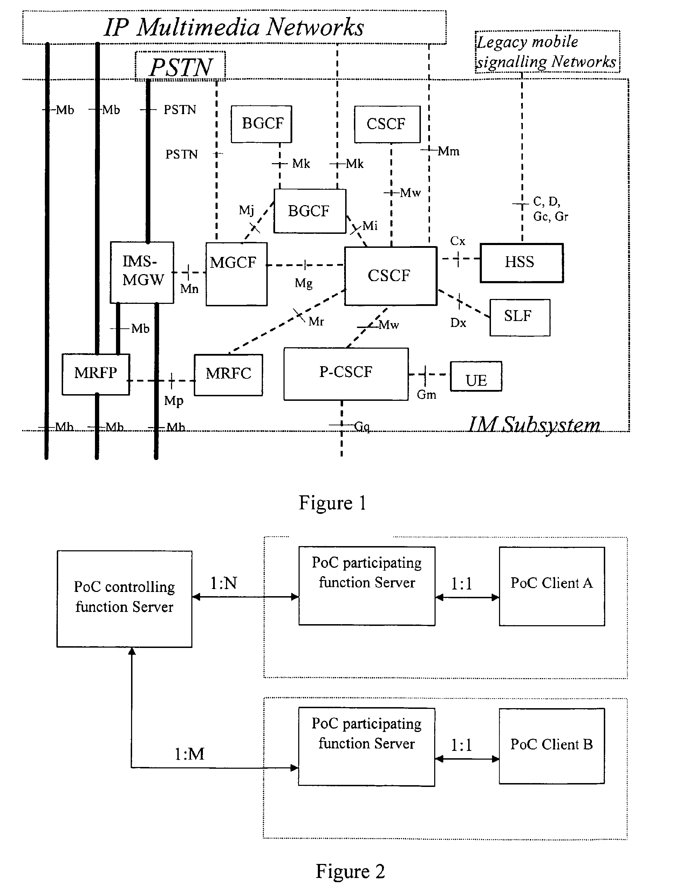

As a main bearer network of PoC, IP media sub-system (IMS) has a specific architecture as shown in Figure 1. The MRFC, as a media resource control function entity, may be arranged in combination with an application server (such as a PoC server or an instant message server (IM server)), so as to implement the operations such as adding or deleting a media stream as well as mixing a media stream in a multiparty session. In the architecture of IMS, functional entities, including Media Gateway Control Function entity (MGCF), Call Session Control Function entity (CSCF), IP media sub-system Media Gate Way (IMS-MGW) and so on, participate in the IMS charging respectively, and support the complete charging on IMS and application server (AS).

Figure 2 is a structural representation of the entities in a PoC communication system in an IMS environment. As shown in Figure 2, PoC controlling function server and PoC participating function server implement the session controlling function and participating function in a multiparty PoC session respectively. In each multiparty PoC session, there is only one PoC controlling function server. The PoC controlling function server and the PoC participating function server are application servers in the IMS environment.

The PoC controlling function server is the core entity of the PoC communication system. The PoC controlling function server performs centralized control and carries out functions including session control (communication control such as session establishment/cancellation, signaling and media negotiation, request processing, media stream distribution and so on), multiparty policy execution (including QoS collection and control) and user plane adaptation, etc.

Each Client corresponds to a PoC participating function server. Each PoC participating function server sends a request to the PoC controlling function server during the session, and the PoC controlling function server coordinates and controls the session process (such as media distribution, data transfer, right and role conversion and QoE certification);

The communication between the clients that participate in the session is implemented as follows: a PoC participating function server sends a request to a PoC controlling function server and receives an instruction from the PoC controlling function server, the PoC controlling function server distributes media and data to the PoC participating function server according to some policies, each PPF forwards the stream and data to the corresponding client, thus a point-to-point or point-to-multipoint communication between the clients may be accomplished.

Additionally, the PoC participating function server and PoC controlling function server may also be implemented on a PoC server, or they may be independent servers for carrying out different functions.

A client is a function entity with which a PoC user can participate in a PoC session, and a PoC group may be made up of many PoC users.

In the prior art, the session between PoC users may employ the following media types: audio (e.g. speech and music), video (without audio component), still image, text (formatted and non-formatted) and file, etc. Therefore, different types of media streams can be transferred between PoC users in the same PoC session. Additionally, the PoC user may establish a PoC session containing various media types. Optionally, support of one or more media types may be added/deleted during the session.

In the prior art, when a PoC client initializes a PoC multimedia session, or when a new media type is added to an existing PoC session, the IMS network entities may collect the description information of related media type in the SIP INVITE request sent by the PoC client, and produce IMS charging information. The charging system collects the charging information of the IMS layer and Packet-Switching Layer (PS layer) and implements the charging process according to such information. Usually, during a PoC session, when a new media stream is added, the cost for this media stream should be charged by the user who initiates it, while other users are only charged for the cost of the specific traffic.

During the research, the inventor finds that there exists such an application scenario: if user A applies to initialize a PoC session with audio supporting, the cost of the PoC server should be charged by user A; when user B adds video supporting to the established PoC session which only supports audio, the cost for the video should be charged by the user B. However, in the existing charging technology of PoC, the collection of media stream information cannot be triggered when a media stream is added or deleted. The PoC server may collect Session Description Protocol (SDP) information when a session is started. However, when the media stream changes during the session, the PoC server cannot collect the charging information of the changed media stream in real time, and the charging issue of media stream cannot be solved when a media stream is added or deleted. As a result, the media stream-based charging in PoC cannot be supported well. Secondly, in the prior art, the collection and charging of the media stream of a PoC session participant is carried out on the IMS layer. In some multiparty session services such as Session Initiation Protocol for Instant Messaging and Presence Leveraging Extensions (SIMPLE)-IM or SIMPLE-PoC, during the session, a plurality of parties participate in the session. During the current session, each participant may add or delete a media stream in the session. Because only charging on calling party mode or charging on called party mode is supported in the prior art, the issue of media stream charging regarding changed media stream during a multiparty session cannot be solved.

### Summary of the Invention

An embodiment of the invention provides a method for media stream-based charging, which includes: receiving, by an application server, a media stream changing request for the multiparty session, wherein the media stream changing request is initiated by a party in the multiparty session; obtaining, by the application server, ID of an initiator of the media stream changing request and/or information of a changed media stream according to the media stream changing request for the session; sending, by the application server, a charging request to a charging server, the charging request carries the information of the changed media stream and/or the ID of the initiator of the media stream changing request; and charging, by the charging server, for the media stream according to the charging request.

Additionally, an embodiment of the invention further provides an application server, which includes: a module configured to receive a media stream changing request for a multiparty session, wherein the media stream changing request is initiated by a party in the multiparty session; a module configured to obtain an ID of an initiator of the media stream changing request and/or information of a changed media stream according to the media stream changing request for the session; and a module configured to send a charging request to a charging server, wherein the charging request carries the information of the changed media stream and/or the ID of the initiator of the media stream changing request.

Additionally, an embodiment of the invention further provides a charging server, which includes: a module configured to receive a charging request sent by an application server, wherein the charging request carries information of the changed media stream and/or an ID of an initiator of the media stream changing request; and a module configured to charge for the media stream according to the charging request.

Additionally, an embodiment of the invention further provides a system for media stream-based charging in a multiparty session, which includes an application server and a charging server, wherein: the application server is configured to receive a media stream changing request for the multiparty session, wherein the media stream changing request is initiated by a party in a multiparty session; obtain an ID of an initiator of the media stream changing request and/or information of a changed media stream according to the media stream changing request for the session, and send a charging request, which carries the information of the changed media stream and/or the ID of the initiator of the media stream changing request, to the charging server; and the charging server is configured to charge for the media stream according to the charging request.

The invention has the following beneficial effects:

During a multiparty session, when the media type of the multiparty session changes, the charging system can charge for the multiparty session of which the media type is changed, and the cost caused by the change of media type can be partaken. Therefore, changing the media stream of a multiparty session can be realized in the multiparty session.

### Brief Description of the Drawings

Figure 1 is a structural representation of an IMS which acts as the main bearer network of the PoC in the prior art;

Figure 2 is a structural representation of the entities in the PoC communication in IMS environment in the prior art;

Figure 3 is a structural representation of a PoC session charged based on media stream according to an embodiment of the invention;

Figure 4 is a flow chart of the method for media stream-based charging in a PoC session according to an embodiment of the invention;

Figure 5 is a structural representation of a PoC session charged based on media stream according to an embodiment of the invention;

Figure 6 is a flow chart of the method for media stream-based charging in a PoC session according to an embodiment of the invention;

Figure 7 is a flow chart of the method for media stream-based charging in a PoC session in a specific application scenario according to an embodiment of the invention; and

Figure 8 is a flow chart of the method for media stream-based charging in a PoC session in a specific application scenario according to another embodiment of the invention.

### Detailed Description of the Embodiments

To make the technical solutions of the invention more apparent, the specific embodiments of the invention will now be illustrated in detail in conjunction with the embodiments and drawings of the invention.

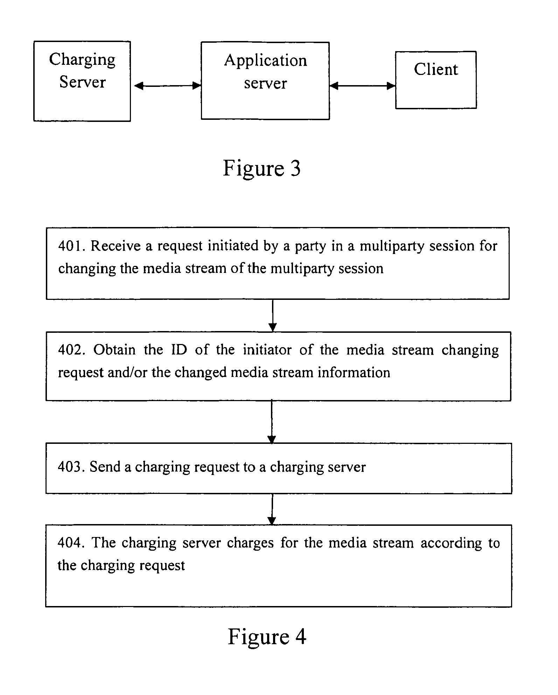

Figure 3 shows a system for media stream-based charging according to an embodiment of the invention. The system includes an application server and a charging server. The application server is adapted to receive a media stream changing request for a multiparty session, where the media stream changing request is initiated by a party in the multiparty session; obtain the ID of the initiator of the media stream changing request and/or the information of the changed media stream according to the media stream changing request for the session, and send a charging request, which carries the information of the changed media stream and/or the ID of the initiator of the media stream changing request, to the charging server. The charging server is adapted to charge for the media stream according to the charging request.

The application server may be a PoC server (including PoC controlling function server and PoC participating function server) or a subsystem layer network, or an instant message server (IM server), or a subsystem layer (IMS) network function server. The charging server may be a 3GPP charging data function server or a charging gateway server.

Figure 4 shows a method for media stream-based charging according to an embodiment of the invention, which includes the following steps:

Step 401: An application server receives a request initiated by a party in a multiparty session for changing the media stream of the multiparty session;

Step 402: The application server obtains the ID of the initiator of the media stream changing request and/or the information of the changed media stream according to the media stream changing request for the session;

Step 403: The application server sends a charging request to a charging server, the charging request carries the information of the changed media stream and/or the ID of the initiator of the media stream changing request; and

Step 404: The charging server performs the charging process for the media stream according to the charging request.

The application server includes: a module for receiving a media stream changing request for a multiparty session initiated by a party in the multiparty session; a module for obtaining the ID of the initiator of the media stream changing request and/or the information of the changed media stream according to the media stream changing request for the session; a module for sending a charging request, which carries the information of the changed media stream and/or the ID of the initiator of the media stream changing request, to the charging server; and when the media stream changing request for the multiparty session includes an address list of the users who have joined in the multiparty session, the application server further includes: a module for forwarding the media stream changing request for the multiparty session to the users who have joined in the multiparty session according to the address list.

The charging server includes: a module for receiving the charging request sent by the application server, wherein the charging request carries the information of the changed media stream and/or the ID of the initiator of the media stream changing request; and a module for performing charging process according to the charging request.

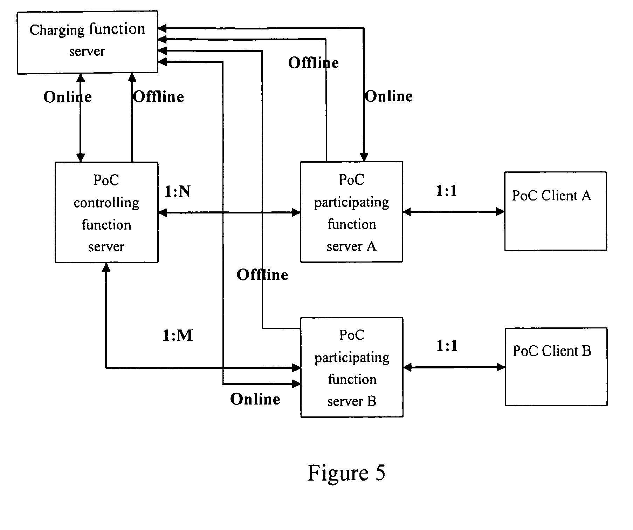

As an implementation of a multiparty session, the invention can not only be applicable for a PoC session. but also be applicable for other multiparty sessions, such as instant message multiparty session. The process of performing on a PoC server is similiar to that of performing on an IM server. Therefore, the invention is only introduced in the application scenario in which a PoC server processes the charging of changing the media type in a PoC multiparty session, and the specific operation processes of other application servers in other multiparty sessions will not be introduced. Figure 5 is a structural representation of a PoC session charged based on the media stream according to an embodiment of the invention. As shown in Figure 5, the system in which charging is based on the media stream according to an embodiment of the invention includes: Multiple PoC clients, which are connected to a PoC controlling function server via a PoC participating function server to which the PoC clients are related. Various entities (for example, between the PoC client and the PoC participating function server, and between the PoC participating function server and the PoC controlling function server) are interconnected via SIP/IP core network. Charging Function is a charging server that supports the online charging and offline charging of PoC.

The PoC participating function server and the PoC controlling function server are connected to and interact with the charging server via an online charging interface and/or an offline charging interface. During the PoC session, the PoC participating function server and the PoC controlling function server collect the charging information of the PoC service, and send charging requests to the charging server via different charging interfaces (online charging interface/offline charging interface) according to the charging attribute of the user. Here, the online charging interface/offline charging interface may be 3GPP Ro interface/3GPP Rf interface, or CH2/CH1 interface specified by OMA.

The media type employed in the PoC session is determined by the media stream information carried in the INVITE request, the INVITE request is sent when the PoC client applies to establish or modify a PoC session. The PoC server (including the PoC participating function server and the PoC controlling function server) obtains the media stream information in the INVITE request, and constructs a charging request according to the PoC client ID (such as the ID of the initiator of the media stream changing request) in the INVITE request sent by the PoC client, and then sends the charging request to the charging server. The charging server performs charging process according to the ID of the initiator of the media stream changing request in the charging information of the charging request as well as according to the media type information in the media stream information, and returns the charging result, in a form of charging response, to the PoC server, i.e., the PoC participating function server or the PoC controlling function server.

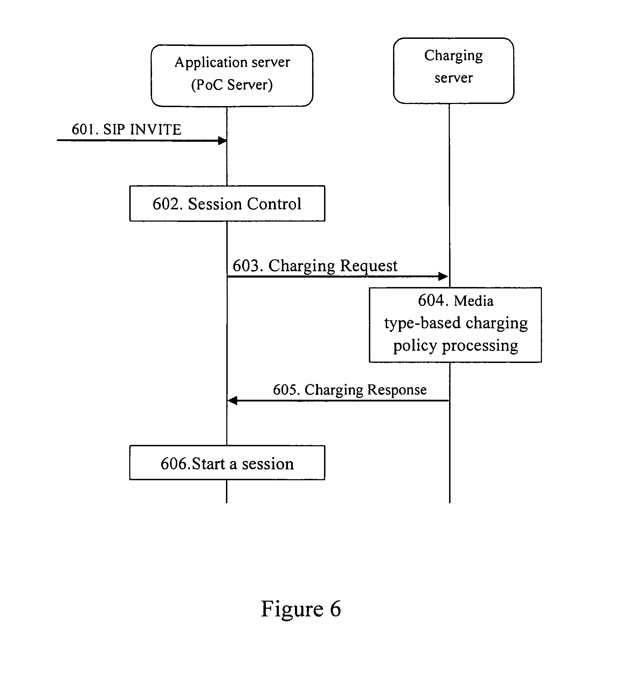

Figure 6 is a flow chart of the method for media stream-based charging in a PoC session according to an embodiment of the invention. As shown in Figure 6, the method for media stream-based charging in a PoC session according to an embodiment of the invention includes the following steps:

Step 601: A PoC server receives an SIP INVITE message and requests to establish a PoC session with various media types, or to modify the existing PoC session, including adding/deleting/modifying the description information of the media type in the existing PoC session; the SIP INVITE message carries the media type of the session to be established or the media type of the modified PoC session, and the ID of the initiator who establishes the session or the ID of the initiator who modifies the media type in the existing PoC session. The ID of the initiator may be SIP URI, Mobile Station International ISDN Number (MSISDN) and International Mobile Subscriber Identification Number (IMSI), etc.

Step 602: The PoC server performs the session processing. Specifically, the PoC Server performs a processing related to the media resources according to the description information of media type in the SIP INVITE request, and controls the PoC session.

Step 603: The PoC server adds the description information of the media type and the ID of the initiator who establishes the session or the initiator who modifies the media type in the existing PoC session into a charging request, and sends the charging request to a charging server.

Step 604: The charging server receives the charging request related to the media type and the ID of the media initiator from the PoC Server, and performs charging.

Step 605: The charging server returns a Charging Response message to the PoC server.

Step 606: The session is established successfully, or the media type in the existing PoC session is modified successfully, and the session is started.

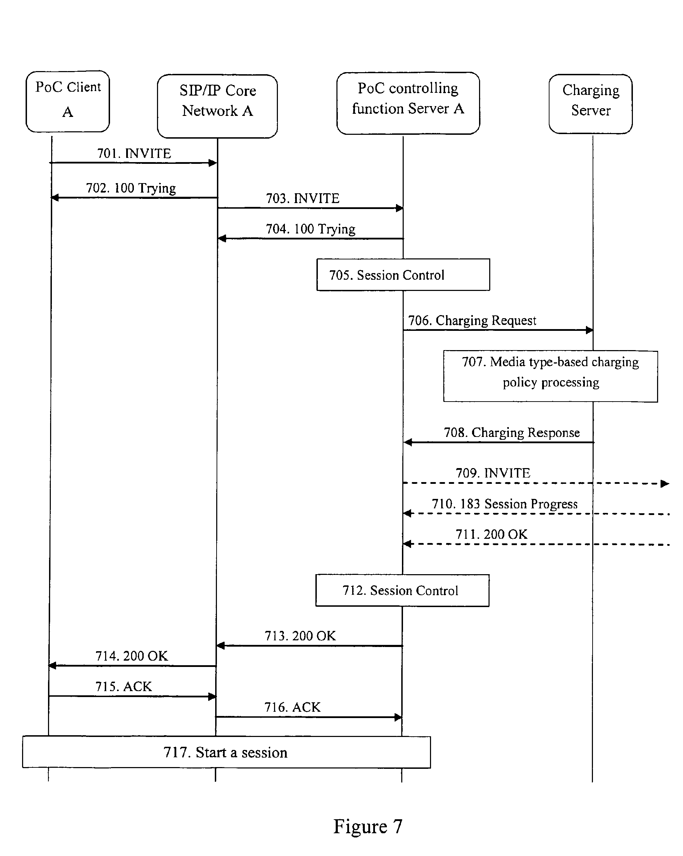

Figure 7 is a flow chart of the method for media stream-based charging in a PoC session in a specific application scenario according to an embodiment of the invention. As shown in Figure 7, the process in which PoC client A establishes a PoC multiparty session in which audio media type is supported includes the following steps:

Step 701: PoC client A sends an SIP INVITE to an SIP/IP core network A.

The SIP INVITE includes: an address list of the PoC users who are invited to join in the PoC session, description information of media type applied by the PoC client A (such as media parameter), PoC service ID, user ID of the PoC client A, Talk Burst Control Protocol (TBCP) request and/or Media Burst Control Protocol (MBCP) request, Media-floor Control Entities, expected QoE configuration and so on.

An example of the INVITE request is as follows:

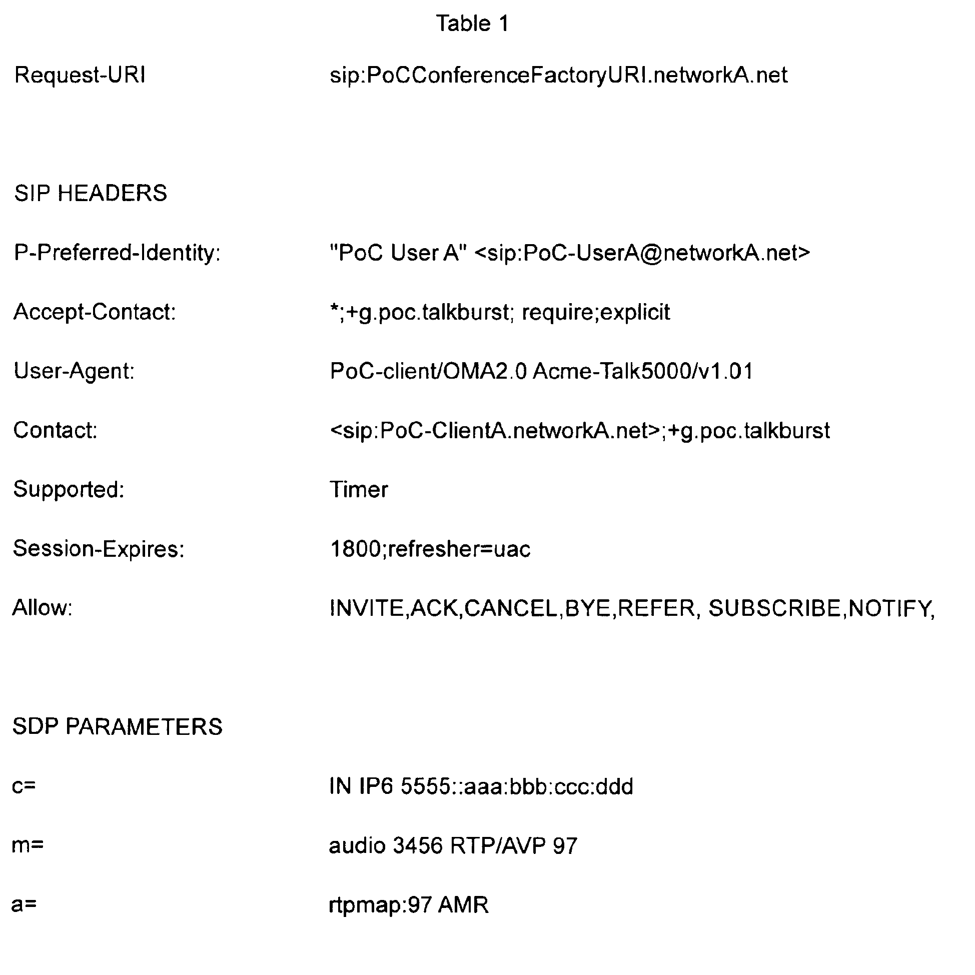

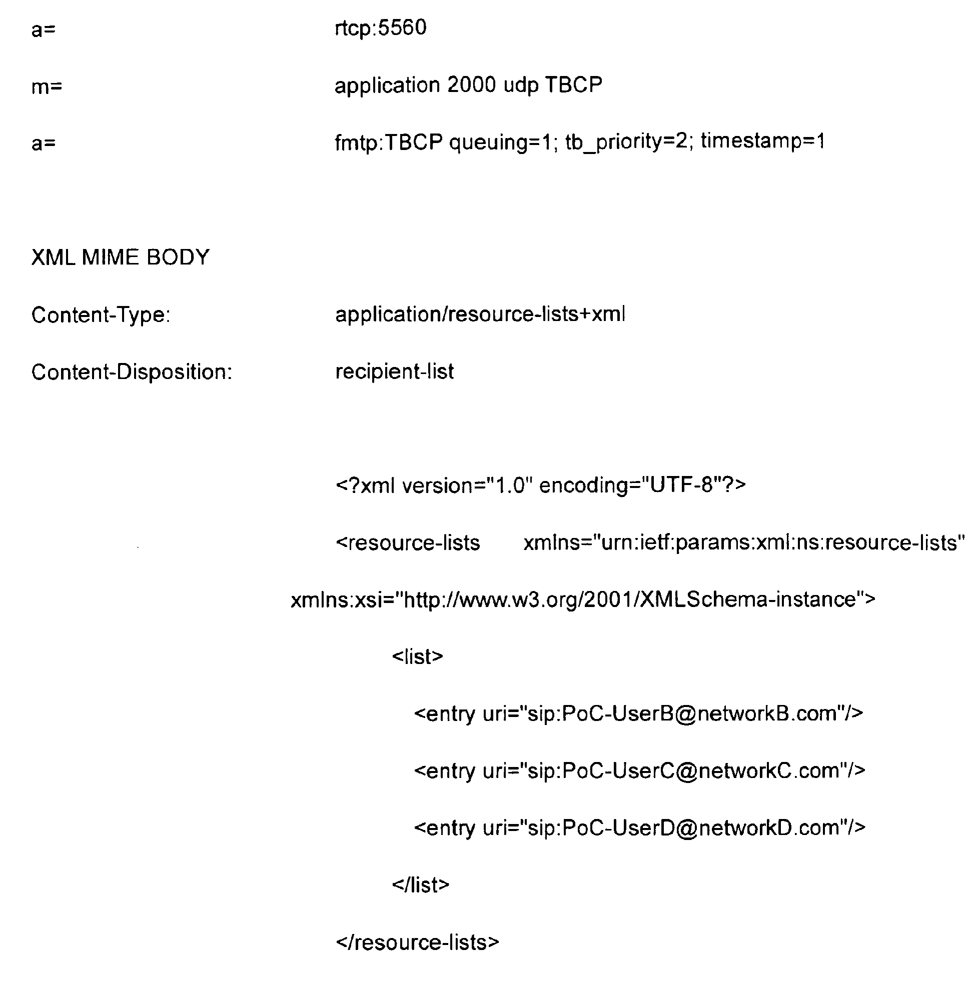

Step 702: The SIP/IP core network A replies a 100 Trying message to the PoC client A.

Step 703: The SIP/IP core network A forwards the SIP INVITE request to the PoC controlling function server A. Optionally, no strict order is laid on Step 702 and Step 703, and they may be carried out simultaneously, or Step 703 may be carried out first and then Step 702 is carried out.

Step 704: The PoC controlling function server A returns a 100 Trying message to the SIP/IP core network A.

Step 705: The PoC controlling function server A performs session control according to the SIP INVITE request, and collects session charging information. Optionally, no strict order is laid on Step 704 and Step 705. Step 705 may be carried out first and then Step 704 is carried out.

The PoC server A obtains the charging-related information, such as description information of the media type, Session owner: PoC-ClientA.networkA.net.

The description information of the media type is as shown in the following table:

| | |
|---|---|
| m= | audio 3456 RTP/AVP 97 |
| a= | rtpmap:97 AMR |
| a= | rtcp:5560 |

The parameter of the session initiator: Initiator: PoC-ClientA.networkA.net.

Step 706: The PoC controlling function server A sends a Charging Request to the charging server according to the description information of the media type and the parameter of the session initiator obtained.

The Charging Request carries parameters such as Session owner, Media info and Initiator obtained by the PoC controlling function server A.

An example of Charging Request is as follows:

```
     <Subscription-Id>= PoC-ClientA.networkA.net
     <SDP-Media-Component>::=<AVP Header: 843 >
     [ SDP-Media-Name ] =audio
    * [ SDP-Media-Description ]
                  **description information of SDP obtained by PoC controlling function
 server A**
     [ Media-Initiator] = PoC-ClientA.networkA.net
     [ 3GPP-Charging-ld ] =correlation ID for correlating the bottom layer network
```

Step 707: The charging server performs charging process according to the charging information in the charging request, such as description information of the media type, session initiator.

Step 708: The charging server sends a charging response to the PoC controlling function server A.

Step 709: The PoC controlling function server A sends a SIP INVITE request to the invited PoC users (in this example, they are the PoC client B, PoC client C and PoC client D) according to an address list of the PoC users who are invited to join in the PoC session in the SIP INVITE request received.

Step 710: The PoC controlling function server A receives a response 183 Session Progress.

Step 711: The PoC controlling function server A receives a success response 200 OK from the invited PoC user. A certain invited PoC user may also return a reject response message to the PoC controlling function server A.

Step 712: The PoC controlling function server A performs session control according to the information returned. For example, the PoC controlling function server A allocates resources for the PoC session.

Step 713: The PoC controlling function server A sends a success response 200 OK to the SIP/IP core network A.

Step 714: The SIP/IP core network A sends a success response 200 OK to the PoC client A.

Step 715: The PoC client A sends an acknowledgement ACK to the SIP/IP core network A.

Step 716: The SIP/IP core network A sends an acknowledgement ACK to the PoC controlling function server A.

Step 717: The PoC session is started.

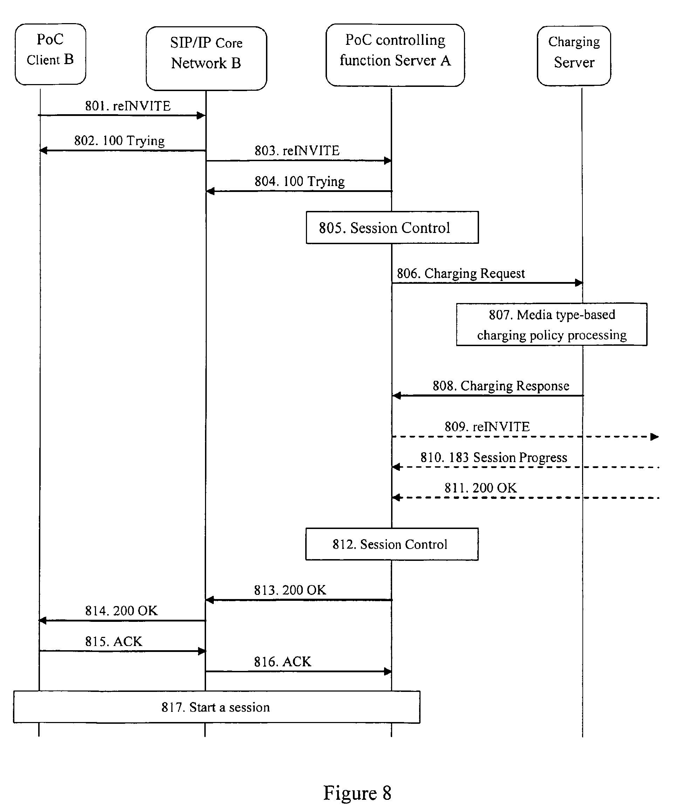

Figure 8 is a flow chart of a method for media stream-based charging in a PoC session in a specific application scenario according to another embodiment of the invention. As shown in Figure 8, the process in which a PoC user applies to add a session media type in the existing PoC session includes the following steps:

Step 801: A PoC client B sends a SIP reINVITE request to a SIP/IP core network B.

The request SIP reINVITE includes: an address list of the PoC users who have joined in the PoC session, description information of the media type (such as media parameter) applied by the PoC client B, PoC service ID, user ID of the PoC client A, Talk Burst Control Protocol (TBCP) request and/or Media Burst Control Protocol (MBCP) request, Media-floor Control Entities, expected QoE configuration and the IDs of the users who are participating in the multiparty session.

Wherein, an example of the reINVITE request is as follows:

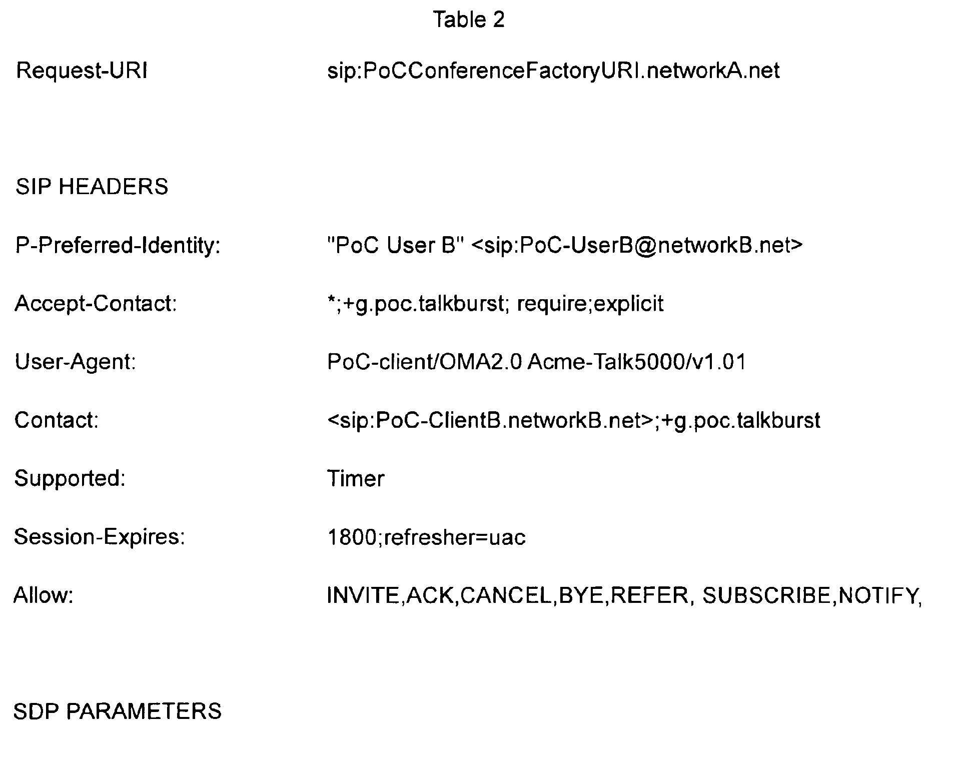

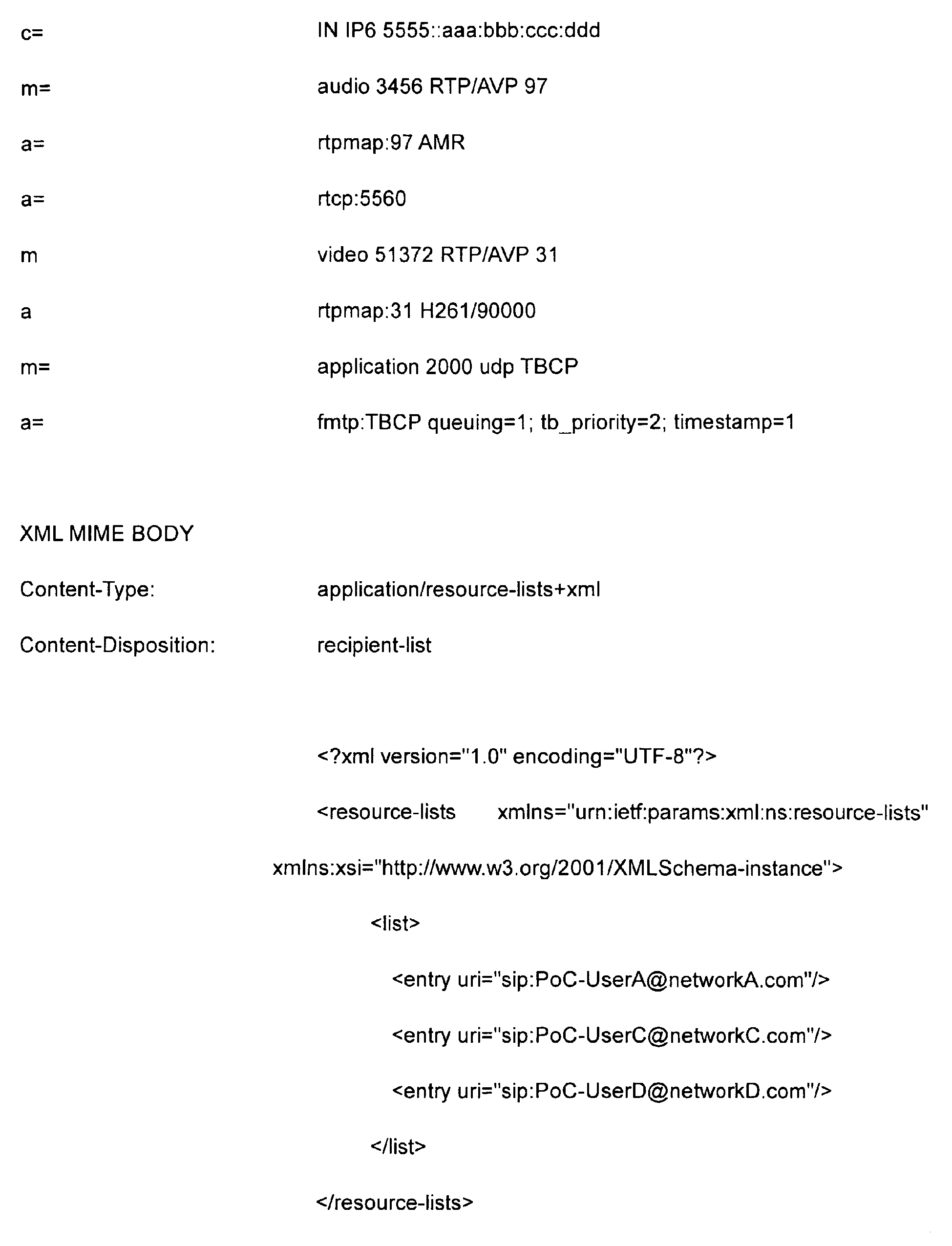

Step 802: The SIP/IP core network B returns a 100 Trying message to the PoC client B.

Step 803: The SIP/IP core network B forwards the SIP re-INVITE request to the PoC controlling function server A.

Step 804: The PoC controlling function server A returns a 100 Trying message to the SIP/IP core network B.

Step 805: The PoC controlling function server A performs session control according to the SIP re-INVITE request, and collects session charging information.

The PoC server A obtains charging-related information, such as description information of the media type, Session owner: PoC-ClientA.networkA.net.

The description information of the media type is as shown in the following table:

| | |
|---|---|
| m= | audio 3456 RTP/AVP 97 |
| a= | rtpmap:97 AMR |
| a= | rtcp:5560 |
| m | video 51372 RTP/AVP 31 |
| a | rtpmap:31 H261 /90000 |

The parameter of the session initiator (Initiator) is: PoC-ClientB.networkB.net.

Step 806: The PoC controlling function server A sends a Charging Request to the charging server according to the description information of the media type and the parameter of the session initiator obtained.

The Charging Request carries parameters such as Session owner, Media info and Initiator obtained by the PoC controlling function server A.

An example of Charging Request is as follows:

```
    <Subscription-Id>= PoC-ClientA.networkA.net
    <SDP-Media-Component>::=<AVP Header: 843 >
    [SDP-Media-Name] =audio
   *[SDP-Media-Description]
                 *description information of SDP, of which the media type is video,
 obtained by PoC controlling function server A*
    [Media-initiator] = PoC-ClientA.networkA.net
    [3GPP-Charging-Id] =correlation ID for correlating the bottom layer network
    [SDP-Media-Name] =video
   * [SDP-Media-Description] =description information of SDP, of which the media type
 is video, obtained by PoC controlling function server A
    [Media-Initiator] = PoC-ClientB.networkB.net
    [3GPP-Charging-Id] =correlation ID for correlating the bottom layer network
```

Step 807: The charging server determines the initiators of different media types according to the information contained in the charging information in the charging request, such as [Media-Initiator], i.e., the initiator of changing the session media type (in this example, it is the PoC client B in network B), and [SDP-Media-Description], i.e., the description information of the SDP media type (in this example, it is video); and performs charging control according to the charging policies for different media types.

Step 808: The charging server sends a charging response to the PoC controlling function server A.

Step 809: The PoC controlling function server A sends a SIP re-INVITE request to the invited PoC users (in this example they are the PoC client A, PoC client C and PoC client D) according to the address list of the PoC users who are invited to join in the PoC session in the SIP re-INVITE request received. The SIP re-INVITE request carries new SDP description information in the PoC session.

Step 810: The PoC controlling function server A receives a response 183 Session Progress.

Step 811: The PoC controlling function server A receives a success response 200 OK from the invited PoC user. A certain invited PoC user may also return a reject response message to the PoC controlling function server A.

Step 812: The PoC controlling function server A performs session control according to the information returned.

Step 813: The PoC controlling function server A sends a success response 200 OK to the SIP/IP core network B.

Step 814: The SIP/IP core network B sends a success response 200 OK to the PoC client B.

Step 815: The PoC client B sends an acknowledgement ACK to the SIP/IP core network B.

Step 816: The SIP/IP core network B sends an acknowledgement ACK to the PoC controlling function server A.

Step 817: A session is started among all the users participating in the session additional with the new media type (audio, in this example), and the session is implemented in audio mode and video mode between the users of the PoC client B and the client which sent the success response 200 OK.

In this embodiment, the charging is performed on the PoC client B for the added media type in the PoC multiparty session established. However, in this embodiment, if the session in audio mode, which is established by the PoC client A, is ongoing, the charging on the PoC client A continues.

However, the PoC client B may also modify the media type employed in the PoC multiparty session established. If the request initiated by the PoC client B only includes video and no audio that is being used is contained, the charging on PoC client A stops. Because the PoC multiparty session that employs video is initiated by the PoC client B, the PoC client B will be charged. The process is consistent with that of Figure 8.

However, if the media type employed in the PoC multiparty session established includes audio and video, the PoC client B may send a SIP re-INVITE request so as to make the PoC multiparty session established include only audio. Because the session that employs audio in the established PoC multiparty session is initiated by the PoC client A, the PoC controlling function server sends a new charging request on the PoC client A to the charging server according to the SIP re-INVITE request. The new charging request on the PoC client A only charges for the audio. Of course, a carrier may set a specific charging policy for changing the media type in the multiparty session. When a media type is charged, the charged party is determined according to the charging policy of the carrier. In the embodiments of the invention, only an application scenario of the charging policy is provided.

The process in which the charging server performs online charging includes the following steps:

The charging server receives a Charging Request, which carries parameters such as Session owner, Media info (media stream information), Initiator (ID of the initiator who initiates the change of the media stream), and the changed media stream information.

The charging server stores a charging policy based on various media stream information, and determines whether the prepay account balance of the user corresponding to the Initiator in the Charging Request is sufficient according to the charging policy of the changed media stream information, and then returns a message indicating whether the reserving for the count of Initiator is successful to the PoC controlling function server according to the charging result.

The specific process in which an offline charging server performs offline charging is as follows:

The charging server receives a Charging Request, which carries parameters such as Session owner, Media info (media stream information), Initiator (ID of the initiator who initiates the change of the media stream), and the changed media stream information.

The charging server stores a charging policy based on various media stream information, and generates a CDR which identifies that the charged party is Initiator according to the charging policy of the changed media stream information, and then sends the CDR to a Post-paid billing system for accounting.

Additional advantages and modifications will readily occur to those skilled in the art. Therefore, the invention in its technical aspects is not limited to the specific details and representative embodiments shown and described herein. Accordingly, various modifications and variations may be made without departing from the spirit or scope of the invention as defined by the appended claims and their equivalents.

## Claims

1. A method for sending a media stream-based charging request in a multiparty session, comprising:
receiving a media stream changing request for the multiparty session, wherein the media stream changing request is initiated by a party in the multiparty session;
obtaining media stream change information according to the media stream changing request for the session; and
sending the charging request to a charging server, wherein the charging request carries the media stream change information.

2. The method for sending the media stream-based charging request in the multiparty session according to claim 1, wherein the media stream change information comprises an ID of an initiator of the media stream changing request and/or information of a changed media stream.

3. The method for sending the media stream-based charging request in the multiparty session according to claim 1, further comprises:
performing charging process for the media stream according to the charging request.

4. The method for sending the media stream-based charging request in the multiparty session according to claim 3, wherein: the charging server stores a charging policy based on various media stream information; and the process of performing charging process for the media stream according to the charging request comprises:
charging, by the charging server, according to the charging request, the charging policy with respect to information of the changed media stream as well as according to the ID of the initiator.

5. The method for sending the media stream-based charging request in the multiparty session according to claim 1, further comprises: returning, by the charging server, a charging response to the application server.

6. The method for sending the media stream-based charging request in the multiparty session according to claim 1, wherein, the media stream changing request for the multiparty session comprises an address list of users who have joined in the multiparty session; and the method further comprises:
forwarding the media stream changing request for the multiparty session to the users who have joined in the multiparty session according to the address list; and carrying out the multiparty session with a changed media type after receiving a reply from a user who is invited to join in the multiparty session.

7. An application server, comprising:
a module configured to receive a media stream changing request for a multiparty session, wherein the media stream changing request is initiated by a party in the multiparty session;
a module configured to obtain media stream change information according to the media stream changing request for the session ; and
a module configured to send a charging request to a charging server, wherein the charging request carries information of a changed media stream and/or an ID of an initiator of the media stream changing request.

8. The application server according to claim 7, wherein the media stream change information comprises the ID of the initiator of the media stream changing request and/or the information of the changed media stream.

9. The application server according to claim 7, wherein, the media stream changing request for the multiparty session comprises an address list of users who have joined in the multiparty session; and the application server further comprises:
a module configured to forward the media stream changing request for the multiparty session to the users who have joined in the multiparty session according to the address list.

10. A charging server, comprising:
a module configured to receive a charging request sent by an application server, wherein the charging request carries media stream change information; and
a module configured to charge for a media stream according to the charging request.

11. The charging server according to claim 10, wherein the media stream change information comprises an ID of an initiator of a media stream changing request and/or information of a changed media stream.

12. A system for media stream-based charging in a multiparty session, comprising an application server and a charging server, wherein:
the application server is configured to receive a media stream changing request for the multiparty session, wherein the media stream changing request is initiated by a party in the multiparty session; obtain media stream change information according to the media stream changing request for the session, and send a charging request, which carries the media stream change information, to the charging server; and
the charging server is configured to charge for the media stream according to the charging request.

13. The system for media stream-based charging in the multiparty session according to claim 12, wherein the media stream change information comprises an ID of an initiator of the media stream changing request and/or information of a changed media stream.

14. The system for media stream-based charging in the multiparty session according to claim 12, wherein the application server is a Push to Talk over Cellular server, an Instant Message server or a subsystem IP media sub-system network function server.

15. The system for media stream-based charging in the multiparty session according to claim 12, wherein the charging server is a 3GPP charging data function server or a charging gateway server.
